# FASCICULE DE BREVET EUROPEEN

(11) **EP 1 946 252 B1**
(45) Date de publication et mention de la délivrance du brevet: **08.08.2012**
(21) Numéro de dépôt: 05817136.4
(22) Date de dépôt: 09.11.2005
(51) Int. Cl.: G06K 19/077, G06K 19/04, A44C 21/00

(54) **JETON A INSERT A PUCE ELECTRONIQUE**
TOKEN MIT ELEKTRONISCHER CHIPEINLAGE
TOKEN WITH ELECTRONIC CHIP INSERT

(43) Date de publication de la demande: 23.07.2008
(73) Titulaire: Gaming Partners International, 21420 Savigny-les-Beaune (FR)
(72) Inventeur: CHAPET, Pierre, F-21200 BEAUNE (FR); CHARLIER, Gérard, F-75006 PARIS (FR)
(74) Mandataire: Tripoz, Inès
(86) Numéro de dépôt international: PCT/FR2005/002793
(87) Numéro de publication internationale: WO 2007/054626

(56) Documents cités:
- WO-A-02/47023
- WO-A-2005/069209
- FR-A- 2 817 373
- US-A- 4 703 165
- US-A- 5 973 599
- US-B1- 6 296 190

## Description

La présente invention concerne des jetons en forme générale de disque comportant des dispositifs d'identification à .puce électronique sans contact, notamment des jetons de jeu ou de casino.

D'une façon générale les jetons de jeu sont fabriqués en matière plastique rigide et résistante aux rayures pour obtenir une structure d'ensemble robuste. Les jetons de jeu présentent des motifs variés en dessins ou en couleurs pour former un décor plus ou moins complexe et réduire les risques de falsification et/ou de reproduction frauduleuse. Par ailleurs l'utilisation en association à la valeur des jetons de codes de couleurs et de motifs colorés notamment sur la tranche des jetons permet aux croupiers ou autres utilisateurs par simple visualisation d'identifier et/ou de trier rapidement les jetons même empilés.

Pour lutter contre la fraude et faciliter le comptage et le suivi des jetons, notamment dans une salle de jeu ou un casino, ont été proposés des jetons intégrant des modules à circuit électronique à mémoire dans laquelle sont stockées des informations associées au jeton telles que, par exemple, son numéro ou code d'identification et/ou sa valeur numérique. Le plus souvent la communication entre le module à circuit électronique intégré au jeton et son poste de lecture/écriture extérieur est réalisée sans contact, on utilise alors un dispositif d'identification à puce électronique sans contact comportant une puce à circuit électronique associée à une antenne, en général à boucle circulaire, afin de pouvoir communiquer « sans contact» avec le poste de lecture/écriture selon la technique d'identification radiofréquence RFID, la puce combinant alors une partie de circuit à fonction d'émetteur/récepteur avec une partie de circuit mémoire à fonction de stockage d'information.

Le brevet US 4.969.549 décrit un jeton de payement utilisable dans les installations de téléphone public dans lequel le circuit électronique et son antenne sont encapsulés dans d'un disque en matière plastique de petit diamètre, compris entre 20 et 30mm, sans toutefois préciser son procédé de fabrication, le jeton étant par ailleurs traversé en son centre par un noyau axial conducteur.

Le brevet US 5.166.502 décrit un jeton de casino dans lequel l'antenne et le circuit électronique sont disposés à l'intérieur d'un lest en métal lui même placé entre deux étiquettes faciales au centre d'un anneau en matière plastique injecté, le tout étant maintenu en place à l'aide de résine époxy et par une seconde injection recouvrant l'anneau et la périphérie des étiquettes. Ce jeton, de structure complexe et coûteuse à la fabrication, n'offre pas toute la sécurité souhaitée dans la mesure où il est possible d'accéder au circuit électronique par simple découpage d'une étiquette faciale sans pour autant détruire complètement la structure du jeton et rendre celui-ci inutilisable.

Le brevet EP 0694872 appartenant au Demandeur décrit un jeton de casino dont le corps comporte en insert un disque central constitué d'une coque rigide en matière plastique chargée de particule métallique et porteuse d'un dispositif d'identification électronique, et une couronne annulaire en matière plastique injectée autour du disque, le disque central faisant également fonction de lest par le choix de la matière et de quantité de la charge métallique pour donner au jeton le poids total désiré par le casino. Dans une première variante, la coque monobloc est injectée autour d'un boîtier de protection dans lequel le dispositif électronique a été préalablement intégré. Dans une seconde variante la coque est obtenue par solidarisation après mise en place du dispositif d'identification électronique d'un couvercle et d'un disque creux en matière plastique injectée. Quoique donnant de bons résultats, cette technique de fabrication des jetons à identifiant électronique présente des limites, notamment au niveau du diamètre maximal de la boucle de l'antenne à intégrer dans le disque central compte tenu des dimensions des jetons généralement utilisés dans les casinos et salles de jeux. Pour fixer les idées, les jetons de casinos d'un diamètre généralement compris entre 39 et 50 mm utilisent des puces électroniques fonctionnant autour d'une fréquence de 125 KHz et présentent un diamètre d'antenne de l'ordre de 21 mm. Toutefois le Demandeur a remarqué l'intérêt d'utiliser des antennes de plus grande surface active, notamment de plus grand diamètre, avec des puces électroniques de fonctionnant autour d'une fréquence de 13,56 MHz, par exemple des antennes à boucle d'un diamètre minimum de 25 mm, tout du moins dans des applications de jetons de casino.

Le brevet US 2002/0006829 décrit des jetons dans lequel un dispositif d'identification électronique utilisant une puce à fréquence de fonctionnement de 13,56 MHz est accolé sur le revers d'une étiquette décorative en plastique disposée dans une cavité prévue sur face latérale du Jeton. Comme pour le jeton objet du brevet US 5.166.502, cette structure n'offre pas toute la sécurité souhaitée dans la mesure où il est possible d'accéder au circuit électronique par simple découpage de l'étiquette faciale sans pour autant détruire complètement la structure du jeton et rendre celui-ci inutilisable. Par ailleurs l'étiquette, découpée dans une plaque mince de matière plastique, n'assure pas une protection suffisante aux radiations lumineuses ou analogues (notamment radiations UV) auxquelles certaines puces de 13,56 MHz paraissent assez sensibles.
Le brevet US 6,296,190 décrit un jeton de casino en forme générale de disque comportant un corps présentant une ouverture centrale dans laquelle est disposé un insert comportant un dispositif d'identification à puce électronique sans contact et antenne associée, dans lequel l'insert comporte deux plaquettes rigides solidarisées ou emboitées pour définir entre elles une zone annulaire périphérique dans laquelle est disposé ledit dispositif d'identification.
Pour ce jeton, l'assemblage des deux plaquettes s'effectue en partie latérale.
La demande de brevet WO 2005/069209 décrit un jeton utilisable comme ticket de transport pour le métro ou le bus dans lequel une étiquette RF est implantée, fabriqué par un procédé de moulage par injection. Ce jeton comporte un corps présentant la combinaison de deux disques ayant chacun une dépression en partie centrale, l'étiquette RF étant implantée dans les dépressions, et qui sont maintenus entre eux, en partie périphérique, par un anneau extérieur en matière injectée.
L'assemblage des deux plaquettes dans ce jeton s'effectue en partie latérale par un procédé de moulage par injection.
La demande de brevet FR 2 817 373 décrit un procédé de fabrication d'objets portables de type carte sans contact comprenant un dispositif à puce électronique sans contact et antenne associée. Ce procédé n'est pas mis en oeuvre dans la fabrication de jetons à dispositif d'identification électronique sans contact.

L'invention a pour but de proposer des jetons à dispositif d'identification électronique sans contact, notamment des jetons de casinos, en forme générale de disque dont le corps comporte un insert central dont la structure permet implantation d'une puce électronique à antenne à surface active agrandie tout en offrant la protection requise au dispositif d'identification électronique.

A cette fin l'invention propose un jeton selon la revendication 1.

Comme présenté en détails ci-après la structure d'insert selon l'invention permet d'augmenter la surface active de l'antenne de la puce tout en assurant une bonne protection du dispositif d'identification entre les deux plaquettes de matière plastique rigide. En particulier l'agencement selon l'invention interdit toute possibilité de remplacement frauduleux de l'insert au risque de détruire complètement le jeton et le rendre inutilisable. Enfin la disposition de la puce électronique sans contact en position médiane dans l'épaisseur de l'insert du jeton protège celle-ci des radiations lumineuses et UV et facilite la lecture radiofréquence sans contact RFID de piles ou de colonnes de jetons

Selon un mode de réalisation préférentiel des jetons selon l'invention, la partie centrale de la face interne d'au moins une des plaquettes comporte au moins une projection centrale pour définir autour de la ou desdites projections ladite zone annulaire périphérique avec un faible écartement entre les faces internes des plaquettes.

Selon une première variante l'antenne est portée par un film mince isolant disposé entre les deux plaquettes présentant au moins un perçage central traversé par la ou au moins une desdites projections centrales. Comme précisé ci-après dans la description, il est possible d'obtenir un écartement entre plaquettes de l'ordre de 2/10èmes de mm. Cet agencement permet de limiter l'épaisseur de l'insert et donc du jeton, ce qui est parfois recherché par les casinos, d'augmenter l'épaisseur des plaquettes formant l'insert et le poids de celui-ci ou d'insérer une ou deux pastilles en film détectable.

Selon une autre variante le film mince est fixé par adhésif sur la face interne d'au moins une des plaquettes. Avantageusement tout ou partie de l'antenne est obtenue par dépôt de matière conductrice sur le film mince isolant.

Selon une autre variante de jetons selon l'invention, au moins une des plaquettes porte sur la périphérie de sa face interne une butée annulaire de protection du dispositif d'identification contre l'écrasement et/ou l'entrée de matière dans la zone annulaire périphérique. Cet agencement renforce encore la protection du dispositif d'identification électronique sans contact.

Selon encore une autre variante de jetons selon l'invention, l'insert a une forme générale de disque et l'antenne est formée en boucle de diamètre compris entre 25 et 30 mm. Avantageusement ladite puce fonctionne dans un intervalle de fréquences compris entre 10 à 17 MHz ou dans un intervalle de fréquences compris entre 2 et 5 GHz.

Selon encore une autre variante de jetons selon l'invention, l'insert comporte entre les deux plaquettes deux pastilles en film détectable orienté en matière active ou en alliage sensible au rayonnement électromagnétique, l'orientation des deux films détectables étant croisée de préférence sensiblement à 90°. Cet agencement associé à des portiques de détection aux accès des salles de jeux des casinos offre une bonne protection contre les vols de jetons.

Selon encore une autre variante de jetons selon l'invention, le corps du jeton est réalisé en matière plastique injectée autour dudit insert avec recouvrement de la périphérie de l'insert et/ou avec introduction de matière dans la tranche de l'insert. En particulier l'insert présente un insert à périphérie biseautée ou à bords arrondis et/ou une tranche creusée d'une gorge. Avantageusement les plaquettes sont réalisées en matière plastique comportant éventuellement des charges pondérales compatibles avec la transmission sans contact RFID.

Selon encore une autre variante du jeton selon l'invention, celui comporte sur chaque face une cavité dans laquelle est fixée une étiquette porteuse d'un décor et/ou d'une marque et/ou d'un hologramme.

Le jeton selon l'invention tel que défini ci-dessus et/ou dans toutes ses variantes ou modes de réalisation constitue un jeton de jeu ou un jeton de casino.

L'invention concerne également un insert à dispositif d'identification à puce électronique sans contact selon la revendication 15.

L'invention concerne également un procédé de fabrication ne faisant pas partie des revendications, d'un corps d'un jeton selon l'invention et comportant au moins les opérations suivantes :
- la réalisation par injection de matière plastique éventuellement chargée de deux plaquettes d'insert avec au moins une projection centrale de solidarisation ;
- la mise en place sur la face interne d'une des deux plaquettes du dispositif d'identification à puce électronique sans contact et la fixation par adhésif du film mince porteur de la puce et de l'antenne du dispositif d'identification sur la plaquette correspondante ;

- l'assemblage des deux plaquettes autour du dispositif d'identification pour réaliser l'insert ;
- la mise place de l'insert dans un premier moule d'injection, dont les deux demi-coquilles définissent une première empreinte correspondant à l'âme du corps du jeton autour dudit insert au centre de la première empreinte ;
- injection de l'âme du jeton ;
- mise en place de l'âme du jeton dans un second moule d'injection, dont les deux demi-coquilles définissent une seconde empreinte correspondant à la totalité ou à la quasi-totalité du corps du jeton ;
- injection de la nappe de recouvrement;
- injection(s) complémentaire(s) éventuelles d'inclusions de tranche pour compléter le corps du jeton si nécessaire ;
- et optionnellement détourage du corps de jeton pour parfaire la tranche du jeton.

D'autres buts, caractéristiques et avantages de la présente invention apparaîtront à la lecture de la description qui va suivre de divers modes de réalisation préférentiels de jetons selon l'invention donnés à titre d'exemple non limitatif, en référence aux dessins ci-joints dans lesquels :
- les figures 1a et 1b représentent respectivement une vue schématique de face et une vue de profil montrant la tranche, d'un jeton de jeu selon un mode de réalisation préférentiel de l'invention et dont le corps en matière plastique est obtenu par deux injections ;
- la figure 2 représente une vue schématique de face de l'âme du jeton illustré aux figures 1a et 1b telle qu'obtenue par la première injection ;
- la figure 3 représente une vue schématique en coupe diamétrale d'une première variante d'insert utilisé dans le jeton illustré aux figures 1a et 1 b;
- la figure 4 représente une vue schématique en perspective éclatée d'une seconde variante d'insert utilisé dans un autre jeton du type illustré aux figures 1 a et 1 b;
- la figure 5 représente une vue schématique en coupe diamétrale de la seconde -variante-d'insert de la figure 4 après assemblage ;
- la figure 6 représente une vue schématique en perspective éclatée d'un autre mode de réalisation de la seconde variante d'insert des figures 4 et 5 ; et
- les figures 7a, 7b et 7c représentent chacun une vue en coupe diamétrale partielle de jetons selon l'invention à corps réalisé par deux injections successives et incorporant un insert selon la seconde variante.

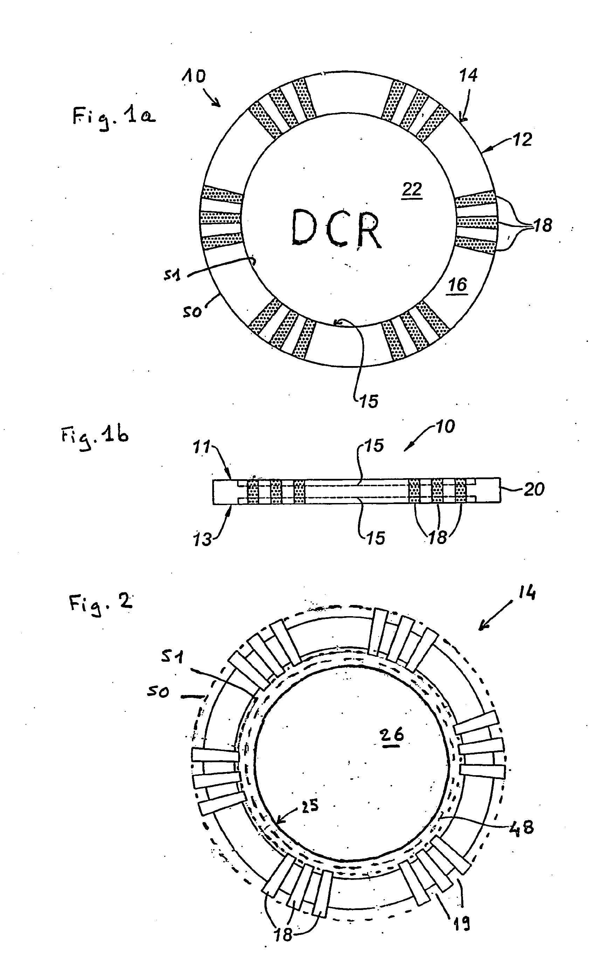

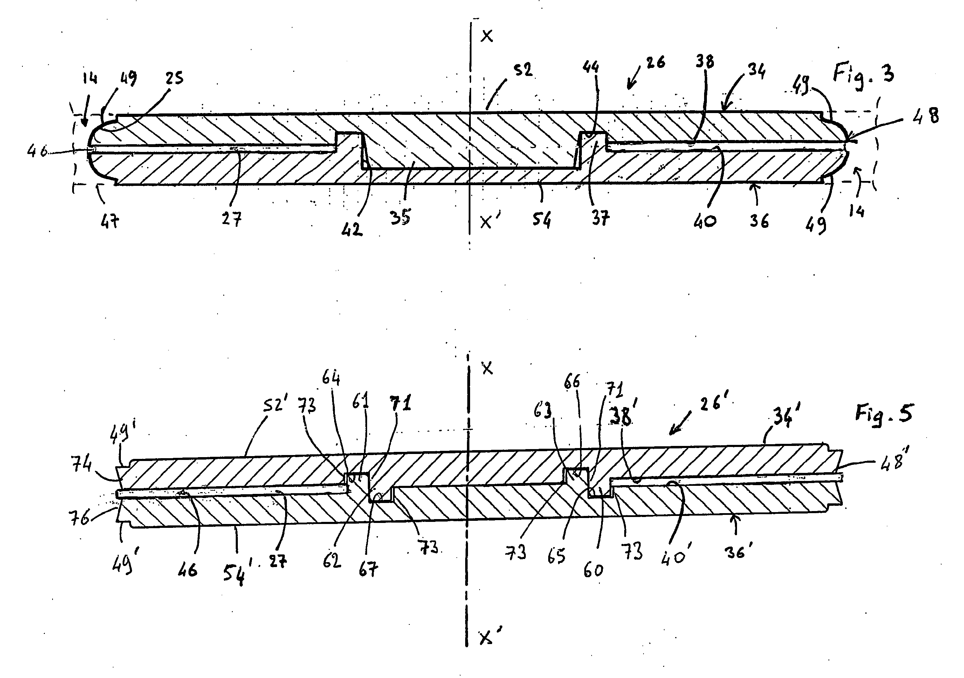

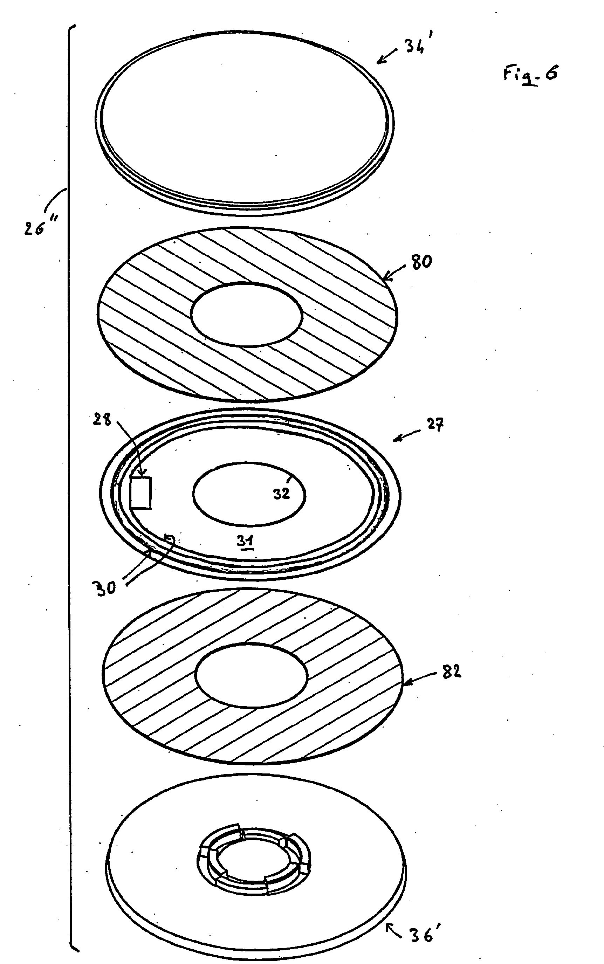

Selon un premier mode de réalisation de l'invention le jeton de jeu multi-injecté 10 en forme de disque en matières plastiques colorées, illustré aux figures 1a et 1b, présente un corps 12 constitué d'une âme 14 porteuse d'un insert 26 comportant un dispositif d'identification 27 à puce électronique sans contact (voir notamment les figures 3 et 6) et obtenue par une première injection de matière plastique d'une première couleur (représentée schématiquement en pointillé pour faciliter la compréhension des figures 1a-1b) et recouverte sur sa partie périphérique par une nappe de recouvrement 16 obtenue par une seconde injection en matière plastique de couleur différente, l'âme 14 portant en périphérie des projections 18 à extension radiale et/ou latérale qui apparaissent par affleurement en surface de la nappe de recouvrement 16 sur les faces 11 et 13 et sur la tranche 20 du jeton. En l'espèce les trois projections 18 sont parallèles à l'axe du jeton 10 (perpendiculaires à la tranche 20 de façon à réaliser un motif bicolore de cinq barres de couleur). Il est ainsi possible de réaliser, pris dans la masse du corps du jeton pour résister aux falsifications, des décors colorés de faces et/ou de tranche susceptibles notamment d'être distingués visuellement. D'une façon classique ces motifs de sont répétés (par exemple 6 fois) et équi-répartis circonférenciellement notamment sur la tranche 20 pour permettre l'identification visuelle ou optique du jeton quelle que soit l'orientation du jeton.

Le jeton est complété par la fixation dans la cavité centrale 15 de faible profondeur prévue sur chaque face 11 et 13 d'une étiquette en plastique 22 porteuse d'un décor, par exemple imprimé ou sérigraphié (représenté schématiquement sur la figure 1 par le signe DCR), et/ou d'une marque (par exemple celle du casino) et/ou d'un hologramme.

Bien entendu, l'invention n'est pas limitée à des jetons bicolores mais concerne également des jetons monocolores à une seule injection (l'âme 14 et la nappe 16 confondues) et des jetons à 3, 4 injections et plus dans lesquels au moins une injection additionnelle d'une matière plastique de couleur distincte de celles des injections précédentes est réalisée directement dans des logements 19 (visibles à la figure 2) définis par les espaces en creux entre les projections 18.

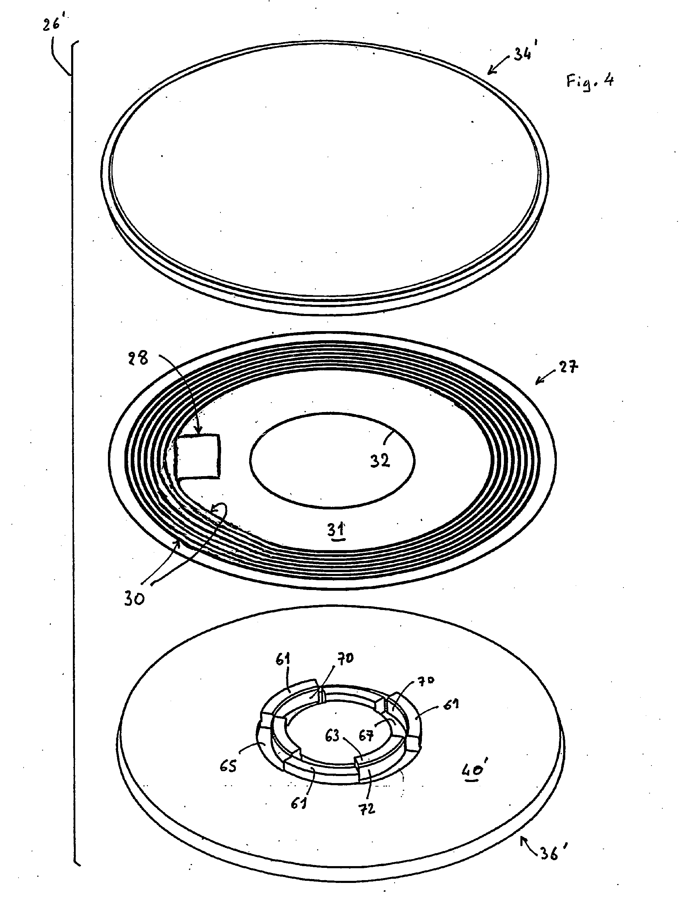

Telle qu'illustrée sur les figures 2 et 3, l'âme 14 du corps 12 présente une forme générale d'anneau dont l'ouverture centrale 25 reçoit l'insert circulaire 26 porteur du dispositif d'identification (montré en coupe sur la figure 3) à puce électronique sans contact 27 (ou identifiant électronique) principalement constitué d'un circuit électronique 28 à émetteur-récepteur RFID (Identification Radio-Fréquence) fixé sur un film mince 31 et d'une antenne circulaire 30 obtenue par dépôt de matière conductrice sur le film mince 31 (par exemple un dépôt électrolytique suivi d'une attaque chimique partielle). Les figures 4 et 6 montrent une vue en perspective du dispositif d'identification 27 RFID dans laquelle l'antenne 30 est dessinée de façon purement schématique par une série de cercles concentriques pour montrer le positionnement de l'antenne 30 en périphérie du disque de film mince 31. A titre d'exemple non limitatif le film 31, en l'espèce un film mince souple, est un film en polyester de type PET (Polyéthylènetéréphtalate) de 40 microns. Bien que non représenté sur les figures le film mince 31 est recouvert sur au moins une de ces faces, de préférence la face porteuse du dépôt d'antenne, d'une pellicule d'adhésif destiné à coller le dispositif d'identification 27 sur la face interne d'une des deux plaquettes 34 et 36 de l'insert 26 et à jouer également un rôle de protection de l'antenne notamment contre l'écrasement. De plus le film mince 31 comporte un perçage central 32 permettant de positionner le dispositif d'identification 27 par rapport à l'insert 26 comme expliqué ci-après. L'ensemble du dispositif d'identification RFID 27 se présente sous la forme d'une feuille mince souple d'une épaisseur maximale de l'ordre de 0,2 mm et de diamètre de l'ordre de 26,5 mm pour 25 mm de diamètre effectif de l'antenne 30 et avec un perçage 32 d'environ 10mm de diamètre.

D'une façon générale, le dispositif d'identification électronique 27 comporte un circuit électronique 28 incorporant une mémoire PROM portant des informations concernant le jeton et/ou la personne ou l'objet associée au jeton, par exemple un code d'identification fixe numérique ou alphanumérique de 64 bits (comportant un ou plusieurs champs tels que: le numéro de série, l'identification d'un produit, d'un lot ou d'un lieu, une valeur numérique associée au jeton, etc.), et un émetteur-récepteur radiofréquence RFID 28 à antenne circulaire périphérique adapté pour être alimenté par couplage inductif à partir des ondes modulées d'un poste de lecture (non représenté). Dans la pratique, l'émetteur-récepteur est susceptible d'échanger sans contact par ondes modulées des données avec un poste de lecture placé à distance (à titre d'exemple non limitatif entre 15 cm et 2 m), la fréquence de travail se situant entre 10 KHz et 5 GHz, pour couvrir notamment les bandes de 125 KHz, 13, 56 MHz et 2,45 GHz. Le dispositif d'identification électronique à mémoire 27 permet par exemple de lutter contre les vols et/ou de faciliter la gestion et l'inventaire d'un lot d'objets dans une espace défini (aires de stockage, entrepôts, magasins). Bien entendu sans sortir du cadre de l'invention, le dispositif d'identifiant électronique 27 à mémoire de type non reprogrammable (lecture seule) peut être remplacé par un dispositif reprogrammable à code évolutif avec possibilité de lecture et écriture en mémoire. A titré d'exemple non limitatif, la puce 28 est du type Magellan à fréquence opérationnelle de 13,56 MHz fabriquée par la société INFINEON (Allemagne).

L'insert 26, illustré schématiquement à la figure 3 (sans respect de l'échelle pour faciliter la compréhension du dessin), est réalisé par deux plaquettes rigides 34, 36 en forme de disque solidarisés ou emboîtés en partie centrale par l'intermédiaire de projections centrales 35, 37 en vis-à-vis respectivement portées par les faces internes correspondantes 38, 40 des plaquettes 34 et 36. Comme illustré sur la figure 3 et selon un mode réalisation particulier présenté à titre d'exemple non limitatif, la projection 37 de la plaquette 36 comporte une cavité centrale 42 recevant la projection 35 de la plaquette 34, la projection 37 de forme annulaire étant elle-même reçue dans une gorge annulaire 44 pratiquée par la face interne 38 de la plaquette 34 le tout étant positionné coaxialement par rapport à l'axe XX' de l'insert 26 (et par conséquence du corps du jeton 12). Les dimensions axiales relatives entre les hauteurs des projections 35 et 37 et les profondeurs de la cavité 42 et de la gorge 44 sont telles qu'une fois assemblées ou emboîtées les deux plaquettes 34 et 36 définissent entre elles une zone annulaire périphérique 46 présentant un faible écartement dans laquelle est logé le dispositif d'identification 27, la projection annulaire 37 se projetant au travers du perçage 32. A titre d'exemple non limitatif l'insert 26 présente un diamètre 27 mm, une épaisseur de 2,5 mm et un écartement entre plaquettes au niveau de la zone annulaire 46 de 0,2 mm, étant fait remarquer qu'il est possible et prévu en variante non représentée de ménager sur la face interne d'une des plaquettes un petit logement pour la puce 28 pour éviter tout risque d'écrasement de celle-ci.

La figure 2 montre le corps du jeton 12 au terme de la première injection, c'est à dire son âme 14 avant couverture par la nappe 16 dont les contours 50 et 51 sont montrés en tirets sur la figure 2. Les contours intérieurs 51 définissent sur chaque face du jeton la cavité circulaire centrale de faible profondeur 15 (de l'ordre de 0,5 mm) servant de logement à l'étiquette en matière plastique décorée 22 fixée au jeton (comme représentée en tirets sur la figure 1b). De plus à l'intérieur des cavités 15 l'âme injectée 14 (montrée partiellement en coupe et en tirets à la figure 3) vient en affleurement avec les faces externes 52 et 54 des plaquettes 34 et 36 (dans lesquelles des épaulements périphériques 49 ont été réalisés comme illustrés à la figure 3) pour définir de part et d'autre de l'insert 26 une collerette de recouvrement 47, la tranche circulaire 48 de l'insert 26 apparaissant également en tirets sur la figure 2.

Bien entendu, l'invention n'est pas limitée à la forme circulaire de l'insert, du dispositif d'identification RFID et de l'antenne correspondante mais couvre toute variante appropriée notamment avec des formes polygonales de préférence avec axe de symétrie axial pour faciliter l'injection du corps du jeton, l'espèce l'âme 14, autour de l'insert 26.

Sans caractère limitatif les jetons selon l'invention se présentent sous la forme d'un disque en général de diamètre compris entre 39 et 50 mm avec une épaisseur de l'ordre de 3,3 mm. La tranche du jeton peut être chanfreinée avec bords adoucis ou simplement à profil droit notamment si l'on souhaite pouvoir faire de la lecture optique à partir de la tranche des jetons. Si nécessaire le profil chanfreiné ou droit est terminé par détourage à la meule ou au tour.

En ce qui concerne les matériaux plastiques utilisés pour l'injection des jetons fabriqués dans le cadre de la mise en oeuvre de l'invention, notamment pour le jeton de jeu 10, ceux-ci sont obtenus à partir d'un polymère de base convenablement chargé (notamment en poids et matières colorées) et choisi parmi les suivants:
- le polyméthacrylate de méthyle (PMMA);
- l'acrylonitrile-butadiène-styrène (ABS);
- les polyamides et leurs copolymères;
- le polyacétal et les copolymères d'acétal (POM/polyoxyméthylène);
- le polysulfure de phénylène (PPS)
- les poly(alkylènes térephtalate), notamment le polybutylène térephtalate (PBT);
- les polyuréthannes thermoplastiques (PUR);
- les polymères vinyliques, polychlorure de vinyle (PVC);
- les polyoléfines, notamment les polyéthylènes (PE) et les polypropylènes.

A titre d'exemple non limitatif, on utilise pour le corps du jeton un polyamide 6 ou 6.6 chargé en poids de poudre de baryte ou de sulfate de baryum (jusqu'à environ 70% en poids). Chaque injection est réalisée entre 800 et 1400 bars avec une température d'injection de 280/300°C et une température de moule d'environ 50°C. Cette composition est également utilisable pour les inserts 26 destinés aux jetons légers (9 à 10g).

Bien entendu les compositions peuvent varier notamment par des charges incorporées dans les matériaux utilisés pour les diverses injections: par exemple en charges pondérales (baryte, poudres métalliques, oxyde de zinc, etc.) et en charges en colorants (oxyde de zinc, etc.) pour obtenir la teinte de couleur choisie pour chaque injection, étant fait remarquer que les charges utilisées par les insert sont choisies compatible avec la transmission RFID sans contact. Notamment en ce qui concerne les inserts 26 destinés aux jetons les plus lourds (13 à 14 g) on utilise un polyamide 6 chargé de poudre de tungstène et/ou de cuivre (jusqu'à environ 80% en poids) ou chargé de petites billes de bronze.

L'invention concerne également un procédé de fabrication ne faisant pas partie des revendications, du corps 12 d'un jeton selon l'invention défini dans toutes ses variantes ici décrites et comportant au moins les opérations suivantes :
- la réalisation par injection de matière plastique éventuellement chargée de deux plaquettes 34, 36 d'insert avec au moins une projection centrale ;
- la mise en place sur la face interne d'une des deux plaquettes du dispositif d'identification 27 à puce électronique sans contact et la fixation par adhésif du film mince 31 porteur de la puce et de l'antenne du dispositif d'identification 27 sur la plaquette correspondante ;
- l'assemblage des deux plaquettes 34, 36 autour du dispositif d'identification pour réaliser l'insert 26 ;
- la mise place de l'insert dans un premier moule d'injection, dont les deux demi-coquilles définissent une première empreinte correspondant à l'âme 14 du corps du jeton autour de l'insert 26. au centre de la première empreinte ;
- injection de l'âme 14 du jeton ;
- mise en place de l'âme 14 du jeton (avec l'insert 26) dans un second moule d'injection, dont les deux demi-coquilles définissent une seconde empreinte correspondant à la totalité ou à la quasi-totalité du corps 12 du jeton ;
- injection de la nappe de recouvrement 16;
- injection(s) complémentaire(s) éventuelles d'inclusions de tranche pour compléter le corps du jeton si nécessaire ;
- et optionnellement détourage éventuel du corps 12 de jeton pour parfaire la tranche 20 du jeton.

De façon optionnelle, le jeton est terminé par la pose des deux étiquettes de décor 22 dans les cavités 15.

Sans sortir du cadre de l'invention l'assemblage de l'insert 26 peut être réalisé de diverses façons, notamment sans caractère limitatif par solidarisation directe des deux plaquettes au niveau de leurs parties centrales (par exemple par collage, notamment à l'aide de résine époxy, soudage aux ultra-sons etc) soit par emboîtage à force ou par emboîtage avec encliquetage des projections centrales ou encore par emboîtage et fixation entre plaquettes par double adhésif disposé sur les deux faces du film 31 pour coopération avec chacune des faces internes des plaquettes 34 et 36.

Comme on peut le voir sur la figure 3, l'insert 26 présente une tranche à bords arrondis (ou biseautés sur l'extérieur) sur laquelle l'âme injectée 14 vient recouvrir les portions arrondies (épaulements 49) pour affleurer au niveau des faces externes des plaquettes 34 et 36. Toutefois sans sortir du cadre de l'invention la tranche peut être droite, biseautée ou arrondie avec une injection de l'âme 14 en recouvrement avec surépaisseur ou épaulement par rapport aux faces externes des plaquettes pour réaliser autour de la périphérie de l'insert 26 une couronne continue ou discontinue. Par ailleurs pour éviter, si nécessaire, des entrées de matière injectée dans la zone annulaire périphérique 46 ou l'écrasement du dispositif d'identification 27, au moins une des plaquettes 34, 36 porte sur la périphérie de sa face interne une butée annulaire (non représentée).

Les figures 4 et 6 se rapportent à une seconde variante d'insert utilisé dans les jetons selon l'invention notamment dans un jeton du type illustré aux figures 1a et 1b et décrit ci-avant. Cet insert 26' est très proche de l'insert 26 ne sera pas décrit à nouveau en détails (de même que les jetons correspondants), étant entendu que les éléments identiques ou quasi-identiques entre les inserts et les jetons correspondants porteront les mêmes références numériques et que les éléments analogues porteront les mêmes références numériques assorties au signe «'».

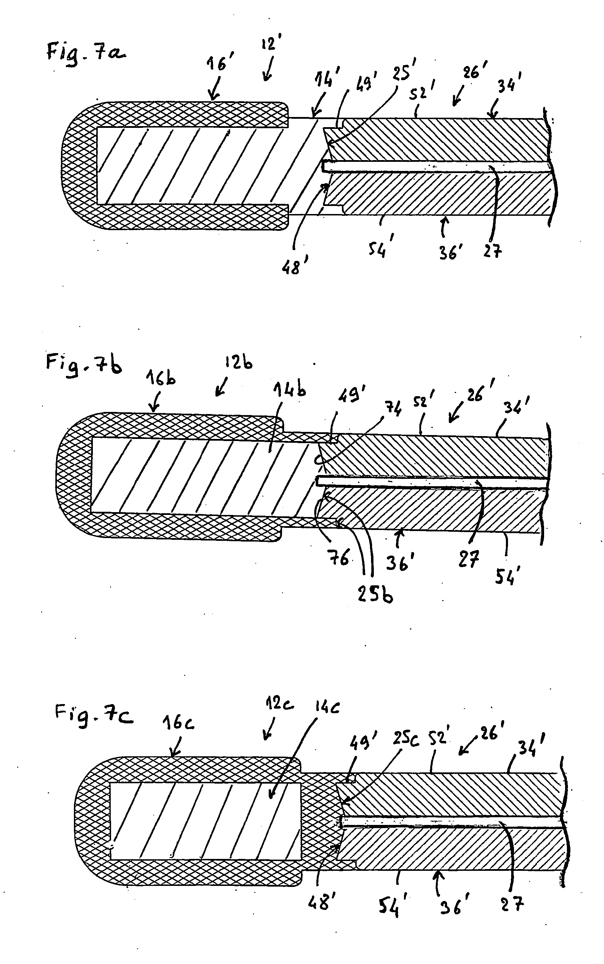

Comme illustré à la figure 4, l'insert 26' est constitué de deux plaquettes de matière plastique rigide injectée 34' et 36', éventuellement chargée en poids comme mentionné ci-avant, entre lesquelles est disposé avec fixation par adhésif le dispositif d'identification 27 à puce électronique sans contact décrit ci-avant avec la puce 28 et son antenne 30 associée au film mince 31. Par rapport à l'insert 26, l'insert 26' se caractérise par les points suivants :
i) les deux plaquettes 34' et 36' sont identiques et interchangeables de façon à réduire les coûts de fabrication, notamment grâce à l'utilisation d'un seul moule d'injection (au lieu de deux) pour l'insert 26' ;
ii) les projections centrales 60, 61, 62 et 63, adaptées pour se projeter au travers du perçage 32 du film 31, se répartissent sur chaque face interne 38' (et 40') sur deux couronnes crénelées concentriques et décalées angulairement, de façon alternée avec des portions de gorges 64, 65, 66 et 67 réalisées dans les faces internes des plaquettes 34' et 36' et destinées à recevoir les projections correspondantes de l'autre face, les hauteurs des projections 60-63 et les profondeurs des gorges 64-67 étant choisies de façon à réaliser une fois les deux plaquettes assemblées la zone annulaire périphérique 46 à faible écartement recevant le dispositif d'identification 27. Comme illustré en détails aux figures 4 et 5 (la première montrant la face interne 40' de la plaquette 36'), chaque couronne crénelée externe, dont le diamètre est choisi légèrement inférieur à celui du perçage 32, comporte trois projections 60, 61 équiréparties selon une symétrie ternaire d'axe XX' et espacées de trois portions de gorges 64 et 65 d'angle au centre légèrement supérieur à celui des projections 60, 61. De façon semblable chaque couronne crénelée interne, adjacente à la couronne crénelée externe mais décalée par rapport à celle-ci d'un angle au centre de 60°, comporte trois projections 62, 63 équiréparties selon une symétrie ternaire d'axe XX' et espacées de trois portions de gorges 66 et 67 d'angle au centre légèrement supérieur à celui des projections 62, 63. Ainsi une fois l'insert 26' assemblé par emboîtage gorges/projections, les projections centrales externes 60 et 61 se projettent respectivement dans les gorges externes 65 et 64 et les projections centrales internes 62 et 63 se projettent respectivement dans les gorges internes 67 et 66. Comme illustré sur la figure 5 et à titre d'exemple non limitatif, l'emboîtage est fait à force par contact appuyé sur des zones d'appui 71 entre les parois cylindriques internes 70 des projections centrales externes 60 (et 61) et les parois cylindriques externes 72 des projections centrales internes 63 (et 64), des jeux faibles 73 étant prévus par ailleurs à l'opposé des zones d'appui 71 pour permettre, si nécessaire, une légère déformation des projections centrales lors de l'emboîtage à force. Bien entendu tout autre solidarisation des deux plaquettes 34' et 36' notamment par collage ou soudage est possible en variante.
iii) la tranche 48' de l'insert 26' est rentrante en son milieu pour laisser ressortir légèrement le bord externe du film 31. A cet effet les périphéries 74 et 76 des plaquettes 34' et 36' sont biseautées vers l'intérieur et les faces externes 52' et 54' des plaquettes 34' et 36' comportent des épaulements réduits 49' destinés à être recouverts de matière plastique injectée du corps du jeton lors de la solidarisation entre l'insert 26' et le corps du jeton comme présenté ci-après en relation aux figures 7a, 7b et 7c.

A titre de variante de l'insert 26', la figure 6 montre une vue éclatée d'un insert 26" dans lequel deux pastilles 80, 82 en film détectable orienté en matière active ou en alliage sensible au rayonnement électromagnétique sont disposées de part et d'autre du dispositif d'identification 27, l'orientation des deux films détectables des pastilles étant croisée sensiblement à 90°. Accessoirement les pastilles 80 et 82 comportent une ou deux faces recouvertes d'adhésif pour faciliter l'assemblage de l'insert 26", étant entendu que l'écartement entre les faces internes des plaquettes 34' et 36' peut être légèrement augmenté pour rattraper l'épaisseur des deux pastilles et éviter l'écrasement du dispositif d'identification 27.

Les figures 7a, 7b et 7c montrent la solidarisation de l'insert 26' dans l'ouverture centrale 25', 25b, 25c d'un corps de jeton annulaire réalisé par double injection avec âme (première injection) et nappe de recouvrement (seconde injection).

La figure 7a correspond à une structure de jeton sensiblement identique à celle du jeton 10, en particulier le corps 12' comporte une âme 14' injectée autour de la tranche 48' de l'insert 26'et qui vient recouvrir les épaulements 49' de l'insert 26' en affleurement avec les faces externes 52', 54' de l'insert. La solidarisation corps/insert est réalisée au niveau de l'ouverture centrale 25' de l'âme 14' (confondue avec l'ouverture centrale du corps 12'), âme 14' qui est recouverte partiellement lors de la seconde injection par la nappe 16'.

La figure 7b correspond à une structure de jeton voisine de celle du jeton 10, mais dans laquelle la solidarisation corps/insert, toujours réalisée dans l'ouverture centrale 25b du corps 12b du jeton, se fait au niveau de l'ouverture centrale de l'âme 14b et au niveau de l'ouverture centrale de la nappe 16b. En particulier le corps 12b comporte une âme 14b injectée autour de la partie centrale de la tranche de l'insert 26' (périphéries biseautées 74, 76 et bord dépassant du film du dispositif d'identification 27 pour venir en affleurement sur les épaulements 49'. L'âme 14b est recouverte lors de la seconde injection par la nappe 16b qui vient recouvrir les épaulements 49' de l'insert 26' en affleurement avec les faces externes 52', 54' de l'insert.

La figure 7c correspond à une autre structure de jeton voisine de celle du jeton 10, mais dans laquelle la solidarisation corps/insert, toujours réalisée dans l'ouverture centrale du corps 12c du jeton, se fait au niveau de l'ouverture centrale de la nappe de recouvrement 16c. En particulier le corps 12c comporte une âme 14c injectée annulaire d'un diamètre supérieur à celui de l'insert 26'. Lors de la seconde injection, la nappe de recouvrement 16c vient envelopper l'âme 14b pour venir recouvrir toute la tranche 48' de l'insert 26' y compris les épaulements 49' de l'insert 26' jusqu'à affleurement avec les faces externes 52', 54' de l'insert.

Bien entendu l'invention n'est pas limitée aux jetons de jeu ou jetons de casino mais concerne également tous les types de jeton en forme de disque à corps en matière plastique injectée intégrant un identifiant électronique, tels que, sans caractère limitatif, les jetons de parking, les jetons de paiement et les contremarques et les badges d'identification des biens ou des personnes.

## Revendications

1. Jeton en forme générale de disque comportant un corps (12) présentant une ouverture centrale (25, 25', 25b; 25c) dans laquelle est disposé un insert (26, 26', 26") comportant un dispositif d'identification (27) à puce électronique sans contact (28) et antenne associée (30),
**caractérisé en ce que** l'insert (26, 26', 26") comporte deux plaquettes rigides (34, 36, 34', 36') solidarisées et/ou emboîtées au niveau de projections centrales (35, 37, 60, 61, 62, 63)
et **en ce que** les projections centrales se répartissent sur chaque face interne (38',40') des plaquettes (34', 36') sur deux couronnes crénelées concentriques et décalées angulairement, de façon alternée avec des portions de gorges (64, 65, 66, 67) réalisées dans les faces internes des plaquettes (34', 36') et destinées à recevoir les projections correspondantes de l'autre face, les hauteurs des projections (60, 61, 62, 63) et les profondeurs des gorges (64, 65, 66, 67) étant choisies de façon à réaliser une fois les deux plaquettes (34', 36') assemblées une zone annulaire périphérique (46) recevant le dispositif d'identification (27).

2. Jeton selon la revendication 1, **caractérisé en ce que** la partie centrale de la face interne des plaquettes (34, 36, 34', 36') comporte au moins une projection centrale (35, 37, 60, 61, 62, 63) pour définir autour de la ou desdites projections ladite zone annulaire périphérique (46) avec un faible écartement entre les faces internes (38, 40, 38', 40') des plaquettes.

3. Jeton selon la revendication 2, **caractérisé en ce que** ladite antenne (30) est portée par un film mince isolant (31) disposé entre les deux plaquettes (34, 36, 34', 36') présentant au moins un perçage central (32) traversé par la ou au moins une desdites projections centrales.

4. Jeton selon la revendication 3, **caractérisé en ce que** ledit film mince (31) est fixé par adhésif sur la face interne (38, 40, 38', 40') d'au moins une des plaquettes.

5. Jeton selon l'une des revendications 3 à 4, **caractérisé en ce que** tout ou partie de l'antenne (30) est obtenue par dépôt de matière conductrice sur le film mince isolant (31).

6. Jeton selon l'une des revendications précédentes, **caractérisé en ce qu'**au moins une des plaquettes porte sur la périphérie de sa face interne une butée annulaire de protection du dispositif d'identification contre l'écrasement et/ou l'entrée de matière dans la zone annulaire périphérique.

7. Jeton selon l'une des revendications précédentes, **caractérisé en ce que** ladite puce (28) fonctionne dans un intervalle de fréquences compris entre 10 à 17 MHz ou dans un intervalle de fréquences compris entre 2 et 5 GHz.

8. Jeton selon l'une des revendications précédentes, **caractérisé en ce que** l'insert (26, 26', 26") a une forme générale de disque et l'antenne est formée en boucle de diamètre compris entre 25 et 30 mm.

9. Jeton selon l'une des revendications précédentes, caractérisé ce que l'insert (26") comporte entre les deux plaquettes (34', 36') deux pastilles (80, 82) en film détectable orienté en matière active ou en alliage sensible au rayonnement électromagnétique, l'orientation des deux films détectables étant croisée de préférence sensiblement à 90°.

10. Jeton selon l'une des revendications précédentes, **caractérisé en ce que** les plaquettes (34, 36, 34', 36') sont réalisées en matière plastique comportant éventuellement des charges pondérales compatibles avec la transmission sans contact RFID.

11. Jeton selon l'une des revendications précédentes, **caractérisé en ce que** le corps (12, 12', 12b, 12c) du jeton est réalisé en matière plastique injectée autour dudit insert (26, 26') avec recouvrement de la périphérie de l'insert et/ou avec introduction de matière dans la tranche (48, 48') de l'insert.

12. Jeton selon la revendication 11, **caractérisé en ce que** l'insert (26, 26') présente un insert (26, 26') à périphérie biseautée ou à bords arrondis et/ou une tranche (48, 48') creusée d'une gorge.

13. Jeton selon l'une des revendications précédentes, **caractérisé en ce que** le corps (12) du jeton comporte sur chaque face une cavité (15) dans laquelle est fixée une étiquette (22) porteuse d'un décor et/ou d'une marque et/ou d'un hologramme.

14. Jeton selon l'une des revendications précédentes, caractérisé entre qu'il constitue un jeton de jeu ou un jeton de casino.

15. Insert (26, 26', 26") à dispositif d'identification (27) à puce électronique sans contact (28) et antenne associée (30) destiné à un jeton selon l'une des revendications précédentes, et en forme générale de disque comportant un corps présentant une ouverture centrale dans laquelle est disposé comportant deux plaquettes rigides (34, 36, 34', 36') solidarisées et/ou emboitées au niveau de projections centrales (35, 37, 60, 61, 62, 63), les projections centrales se répartissant sur chaque face interne (38',40') des plaquettes (34', 36') sur deux couronnes crénelées concentriques et décalées angulairement, de façon alternée avec des portions de gorges (64, 65, 66, 67) réalisées dans les faces internes des plaquettes (34', 36') et destinées à recevoir les projections correspondantes de l'autre face, les hauteurs des projections (60, 61, 62, 63) et les profondeurs des gorges (64, 65, 66, 67) étant choisies de façon à réaliser une fois les deux plaquettes (34', 36') assemblées une zone annulaire périphérique (46) recevant le dispositif d'identification (27).

## Claims

1. Chip in the general shape of a disk, including a body (12) having a central aperture (25, 25', 25b; 25c), in which is disposed an insert (26, 26', 26") a contactless identification device (27) incorporating an electronic microchip (28) and an associated antenna (30, wherein,
the insert (26, 26', 26") includes two rigid plates (34, 36, 34', 36'), fastened or fitted together at their central projections (35, 37, 60, 61, 62, 63),
and wherein the central projections are arranged on each inside face (38', 40') of the plates (34', 36') in two concentric and angularly offset crenelated rings, alternating with groove portions (64, 65, 66, 67) on the inside faces of the plates (34', 36') and adapted to receive the corresponding projections on the other face, the heights of the projections (60, 61, 62, 63) and the depths of the grooves (64, 65, 66, 67) being selected to form a peripheral annular area (46) receiving the device when the two plates (34', 36') have been assembled together.

2. Chip according to claim 1, wherein the central portion of the inside face of the plates (34, 36, 34', 36') has at least on central projection (35, 37, 60, 61, 62, 63) for defining said peripheral annular area (46) around the said projection or projections with a small distance between the inside faces (38, 40, 38', 40') of the plates.

3. Chip according to claim 2, wherein said antenna (30) is carried by a thin insulative film (31), disposed between the two plates (34, 36, 34', 36'), having at least one central aperture (32), through which the or at least one of said central projections passes.

4. Chip according to claim 3, wherein said thin film (31) is fixed by means of an adhesive to the inside face of at least one of the plates.

5. Chip according to any one of claims 3 or 4, wherein all or part of said antenna (30) is obtained by depositing conductive material on the thin insulative film (31).

6. Chip according to any one of the preceding claims, wherein at least one of the plates carries at the periphery of its inside face an annular abutment to protect the identification device from crushing and/or ingress of material into the peripheral annular area.

7. Chip according to any one of the preceding claims, wherein said microchip operates in a frequency range from 10 to 17 Mhz or in a frequency range from 2 to 5 GHz.

8. Chip according to any one of the preceding claims, wherein the insert (26, 26', 26") is generally diskshaped and the antenna is in the form of a loop with a diameter comprised between 25 and 30 mm.

9. Chip according to any one of the preceding claims, wherein the insert (26") includes between the two plates (34', 36') two oriented detectable-film patches of active material or alloy sensitive to electromagnetic radiation, the orientation of the two detectable films being crossed, preferably at substantially 90°.

10. Chip according to any one of the preceding claims, wherein the plates (34, 36, 34', 36') are made from plastics material optionally containing weighting charges compatible with contactless RFID-transmission.

11. Chip according to any one of the preceding claims, wherein the body (12, 12', 12b, 12c) of the chip is made from plastics material injection-molded around said insert (26, 26') and overlapping the periphery of the insert and/or with entry of material into the edge (48, 48') of the insert.

12. Chip according to claim 11, wherein the insert (26, 26') has a beveled or rounded edge and/or an edge (48, 48') in which a groove is formed.

13. Chip according to any of the preceding claims, wherein the body (12) of the chip includes on each face a cavity (15) into which is fixed a label (22) carrying a decoration and/or a mark and/or a hologram.

14. Chip according to any of the preceding claims, wherein the chip constitutes a gaming chip or a casino chip.

15. Insert (26, 26', 26") with a contactless microchip-based (28) electronic device (27) and associated antenna (30) for a chip, according to any one of the preceding claims, in the general shape of a disk, including a body having a central aperture, in which the insert is located, including two rigid plates (34, 36, 34', 36'), fastened or fitted together at central projections (35, 37, 60, 61, 62, 63), the central projections being arranged on each inside face (38', 40') of the plates (34', 36') in two concentric and angularly offset crenelated rings, alternating with groove portions (64, 65, 66, 67) on the inside faces of the plates (34', 36') and adapted to receive the corresponding projections on the other face, the heights of the projections (60, 61, 62, 63) and the depths of the grooves (64, 65, 66, 67) being selected to form a peripheral annular area (46) receiving the device when the two plates (34', 36') have been assembled together.

## Patentansprüche

1. Token mit allgemein scheibenförmiger Gestalt, umfassend einen Körper (12) mit einer zentralen Öffnung (25, 25', 25b; 25c), in der ein Einsatz (26, 26', 26") angeordnet ist umfassend eine berührungslose Identifizierungseinrichtung (27) mit einem Mikrochip (28) und einer verbundenen Antenne (30), **dadurch gekennzeichnet, dass**
der Einsatz (26, 26', 26") zwei steife Platten (34, 36, 34', 36') umfasst, die im Bereich von mittigen Fortsätzen (35, 37, 60, 61, 62, 63) verbunden und/oder ineinander gepasst sind,
und dass die mittigen Fortsätze sich auf jeder Innenseite (38', 40') der Platten (34', 36') auf zwei zackigen Kränzen, die konzentrisch und winklig versetzt sind, in alternierender Weise mit Aushöhlungsabschnitten (64, 65, 66, 67) verteilen, die in den Innenseiten der Platten (34', 36') ausgebildet und bestimmt sind, die korrespondierenden Fortsätze der anderen Seite aufzunehmen, wobei die Höhe der Fortsätze (60, 61, 62, 63) und die Tiefe der Aushöhlungen (64, 65, 66, 67) so ausgewählt sind, dass wenn die beiden Platten (34', 36') einmal zusammengebaut sind, ein ringförmiger peripherer Bereich (46) ausgebildet ist, der die Identifizierungseinrichtung (27) aufnimmt.

2. Token nach Anspruch 1, **dadurch gekennzeichnet, dass** der mittige Teil der Innenseite der Platten (34, 36, 34', 36') wenigstens einen mittigen Fortsatz (35, 37, 60, 61, 62, 63) umfasst, um um den Fortsatz oder die Fortsätze den ringförmigen peripheren Bereich (46) mit einem geringen Abstand zwischen den Innenseiten (38, 40, 38', 40') der Platten zu definieren.

3. Token nach Anspruch 2, **dadurch gekennzeichnet, dass** die Antenne (30) von einem dünnen isolierenden Film (31) getragen wird, der zwischen den beiden Platten (34, 36, 34', 36') angeordnet ist, mit wenigstens einer mittigen Bohrung (32), durch die der oder wenigstens einer der mittigen Fortsätze hindurchgeht.

4. Token nach Anspruch 3, **dadurch gekennzeichnet, dass** der dünne Film (31) mittels Kleber auf der Innenseite (38, 40, 38', 40') wenigstens einer der Platten befestigt ist.

5. Token nach einem der Ansprüche 3 bis 4, **dadurch gekennzeichnet, dass** die Antenne (30) als Ganzes oder ein Teil davon erhalten ist durch Abscheiden von leitfähigem Material auf dem dünnen isolierenden Film (31).

6. Token nach einem der vorangehenden Ansprüche, **dadurch gekennzeichnet, dass** wenigstens eine der Platten auf dem Rand ihrer Innenseite ein Widerlager trägt zum Schutz der ldentifizierungseinrichtung gegen Stauchen und Eindringen von Material in den ringförmigen peripheren Bereich.

7. Token nach einem der vorangehenden Ansprüche, **dadurch gekennzeichnet, dass** der Mikrochip in einem Frequenzbereich von 10 bis 17 Mhz oder einem Frequenzbereich von 2 bis 5 GHz arbeitet.

8. Token nach einem der vorangehenden Ansprüche, **dadurch gekennzeichnet, dass** der Einsatz (26, 26', 26") eine allgemein scheibenförmige Gestalt aufweist und die Antenne als Schleife mit einem Durchmesser zwischen 25 und 30 mm ausgebildet ist.

9. Token nach einem der vorangehenden Ansprüche, **dadurch gekennzeichnet, dass** der Einsatz (26") zwischen den beiden Platten (34', 36') zwei Patches umfasst aus nachweisbarem orientiertem Film aus aktivem Material oder aus einer gegenüber elektromagnetischer Strahlung empfindlichen Legierung, wobei die Orientierung der beiden nachweisbaren Filme gekreuzt ist, bevorzugter Weise im Wesentlichen mit 90°.

10. Token nach einem der vorangehenden Ansprüche, **dadurch gekennzeichnet, dass** die Platten (34, 36, 34', 36') aus Kunststoff hergestellt sind, die optional gewichtete Ladungen tragen, die kompatibel sind mit der berührungslosen RFID-Übertragung.

11. Token nach einem der vorangehenden Ansprüche, **dadurch gekennzeichnet, dass** der Körper (12, 12', 12b, 12c) des Token aus Kunststoff hergestellt ist, der um den Einsatz (26, 26') eingespritzt ist mit Überdeckung der Peripherie des Einsatzes und/oder mit Einführung von Material in die Kante (48, 48') des Einsatzes.

12. Token nach Anspruch 11, **dadurch gekennzeichnet, dass** der Einsatz (26, 26') einen Einsatz (26, 26') mit abgeschrägtem oder abgerundetem Rand und/oder eine Kante (48, 48') aufweist, die mit einer Auskehlung vertieft ist.

13. Token nach einem der vorangehenden Ansprüche, **dadurch gekennzeichnet, dass** der Körper (12) des Token auf einer jeden Seite eine Aussparung (15) aufweist, in der eine Markierung (22) angebracht ist, die eine Verzierung und/oder eine Marke und/oder ein Hologramm trägt.

14. Token nach einem der vorangehenden Ansprüche, **dadurch gekennzeichnet, dass** der Token eine Spielmarke oder ein Casinochip ist.

15. Einsatz (26, 26', 26") für eine berührungslose Identifizierungseinrichtung (27) mit einem Mikrochip (27) und einer verbundenen Antenne (30), bestimmt für einen Token nach einem der vorangehenden Ansprüche, und mit allgemein scheibenförmiger Gestalt, umfassend einen Körper mit einer zentralen Öffnung, in der der Einsatz angeordnet ist, umfassend zwei steife Platten (34, 36, 34', 36'), die im Bereich von mittigen Fortsätzen (35, 37, 60, 61, 62, 63) verbunden und/oder ineinander gepasst sind, wobei sich die mittigen Fortsätze auf jeder Innenseite (38', 40') der Platten (34', 36') auf zwei zackigen Kränzen, die konzentrisch und winklig versetzt sind, in alternierender Weise mit Aushöhlungsabschnitten (64, 65, 66, 67) verteilen, die in den Innenseiten der Platten (34', 36') ausgebildet und bestimmt sind, die korrespondierenden Fortsätze der anderen Seite aufzunehmen, wobei die Höhe der Fortsätze (60, 61, 62, 63) und die Tiefe der Aushöhlungen (64, 65, 66, 67) so ausgewählt sind, dass wenn die beiden Platten (34', 36') einmal zusammengebaut sind, ein ringförmiger peripherer Bereich (46) ausgebildet ist, der die Identifizierungseinrichtung (27) aufnimmt.
